# EUROPEAN PATENT APPLICATION

(11) **EP 3 048 508 A1**
(43) Date of publication of application: **27.07.2016**
(21) Application number: 15195193.6
(22) Date of filing: 18.11.2015
(51) Int. Cl.: G06F 1/16, H04B 1/3827, H04M 1/725

(54) **METHODS, APPARATUSES AND DEVICES FOR TRANSMITTING DATA**

(30) Priority: 23.01.2015 CN 201510035903
(71) Applicant: Xiaomi Inc., Beijing 100085 (CN)
(72) Inventor: XU, Chao, 100085 Haidian District (CN)
(74) Representative: Sadler, Peter Frederick

(57) **Abstract**

The present disclosure relates to methods, apparatuses and devices for transmitting data, which belongs to the field of communication technology. The method includes: establishing (201) a first-type matching connection with a first device; upon detection of a first operation for transmitting data with the first device, receiving (202) data to be sent which is sent from the first device via the first-type matching connection; after a second-type matching connection with a second device is established, detecting (203) a second operation for transmitting data with the second device; and upon detection of the second operation for transmitting data with the second device, sending (204) the data to be sent to the second device via the second-type matching connection.

## Description

### TECHNICAL FIELD

The present disclosure generally relates to the field of communication technology, and more particularly, to methods, apparatuses and devices for transmitting data.

### BACKGROUND

With the continuous development of information technology, to implement information exchange and communication, users usually need to carry out data transmission between different terminal devices.

In the related art, for data transmission, the two terminal devices are required to meet the following conditions: both of the two terminal devices are in an on-line state, and the two devices are installed with the same application having a data transmission capability. Then, the user may log into the application in the on-line state, and data can be transmitted between the two terminal devices through the application.

### SUMMARY

In order to overcome the problem in the related art, the present disclosure provides methods, apparatuses and devices for transmitting data.

According to a first aspect of embodiments of the present disclosure, there is provided a method for transmitting data, which is applied in a smart wearable device, characterized in that. The method includes:
establishing a first-type matching connection with a first device;
upon detection of a first operation for transmitting data with the first device, receiving data to be sent which is sent from the first device via the first-type matching connection;
after a second-type matching connection with a second device is established, detecting a second operation for transmitting data with the second device; and
upon detection of the second operation for transmitting data with the second device, sending the data to be sent to the second device via the second-type matching connection.

In another embodiment, upon detection of a first operation for transmitting data with the first device, receiving data to be sent which is sent from the first device via the first-type matching connection includes:
determining that the first operation is detected when it is detected that a touch operation of a first designated form is generated between the smart wearable device and the first device; and
receiving the data to be sent which is sent from the first device upon detection of the first operation via the first-type matching connection, the data to be sent being determined by the first device according to a manual operation of a user on a first data sending page.

In another embodiment, prior to detection of the second operation for transmitting data with the second device, the method further includes:
establishing the second-type matching connection with the second device;
detection of the second operation for transmitting data with the second device includes:
determining that the second operation is detected when it is detected that a touch operation of a second designated form is generated between the smart wearable device and the second device; and
sending the data to be sent to the second device via the second-type matching connection includes:
determining the data to be sent according to a manual operation of a user on a second data sending page, and sending the data to be sent to the second device via the second-type matching connection.

According to a second aspect of embodiments of the present disclosure, there is provided a method for transmitting data, which is applied in a first device. The method includes:
establishing a first-type matching connection with a smart wearable device when at least one of the first device and a second device is in an off-line state; and
upon detection of a first operation for transmitting data with the smart wearable device, sending data to be sent to the smart wearable device via the first-type matching connection, the smart wearable device is configured to, upon detection of a second operation for transmitting data with the second device, send the data to be sent to the second device via a second-type matching connection;
wherein, the second-type matching connection is a connection established between the smart wearable device and the second device.

In another embodiment, prior to sending data to be sent to the smart wearable device via the first-type matching connection, the method further includes:
determining the data to be sent according to a manual operation of a user on a first data sending page.

According to a third aspect of embodiments of the present disclosure, there is provided an apparatus for transmitting data, which is applied in a smart wearable device. The apparatus includes:
a connection establishing module configured to establish a first-type matching connection with a first device;
a data receiving module configured to, upon detection of a first operation for transmitting data with the first device, receive data to be sent which is sent from the first device via the first-type matching connection;
a detecting module configured to, after a second-type matching connection with a second device is established, detect a second operation for transmitting data with the second device; and
a data sending module configured to, after the second operation for transmitting data with the second device is detected, send the data to be sent to the second device via the second-type matching connection.

In another embodiment, the data receiving module is configured to determine that the first operation is detected when it is detected that a touch operation of a first designated form is generated between the smart wearable device and the first device; and receive the data to be sent which is sent from the first device upon detection of the first operation via the first-type matching connection, the data to be sent being determined by the first device according to a manual operation of a user on a first data sending page.

In another embodiment, the connection establishing module is further configured to establish the second-type matching connection with the second device;
the detecting module is configured to determine that the second operation is detected when it is detected that a touch operation of a second designated form is generated between the smart wearable device and the second device; and
the data sending module is configured to determine the data to be sent according to a manual operation of a user on a second data sending page, and send the data to be sent to the second device via the second-type matching connection.

According to a fourth aspect of embodiments of the present disclosure, there is provided an apparatus for transmitting data, which is applied in a first device. The apparatus includes:
a connection establishing module configured to establish a first-type matching connection with a smart wearable device when at least one of the first device and a second device is in an off-line state; and
a data sending module configured to, upon detection of a first operation for transmitting data with the smart wearable device, send data to be sent to the smart wearable device via the first-type matching connection, the smart wearable device is configured to, upon detection of a second operation for transmitting data with the second device, send the data to be sent to the second device via a second-type matching connection;
wherein, the second-type matching connection is a connection established between the smart wearable device and the second device.

In another embodiment, the apparatus further includes:
a data determining module configured to determine the data to be sent according to a manual operation of a user on a first data sending page.

According to a fifth aspect of embodiments of the present disclosure, there is provided a device for transmitting data. The device includes:
a processor; and
a memory for storing instructions executable by the processor;
wherein the processor is configured to perform:
establishing a first-type matching connection with a first device;
upon detection of a first operation for transmitting data with the first device, receiving data to be sent which is sent from the first device via the first-type matching connection;
after a second-type matching connection with a second device is established, detecting a second operation for transmitting data with the second device; and
upon detection of the second operation for transmitting data with the second device, sending the data to be sent to the second device via the second-type matching connection.

According to a sixth aspect of embodiments of the present disclosure, there is provided a device for transmitting data. The device includes:
a processor; and
a memory for storing instructions executable by the processor;
wherein the processor is configured to perform:
establishing a first-type matching connection with a smart wearable device when at least one of the first device and a second device is in an off-line state; and
upon detection of a first operation for transmitting data with the smart wearable device, sending data to be sent to the smart wearable device via the first-type matching connection, the smart wearable device is configured to, upon detection of a second operation for transmitting data with the second device, send the data to be sent to the second device via a second-type matching connection;
wherein, the second-type matching connection is a connection established between the smart wearable device and the second device.

According to a seventh aspect of the embodiments of the present disclosure, there is provided a computer program, which when being executed on a processor, performs the method of the first aspect of the embodiments of the present disclosure.

According to an eighth aspect of the embodiments of the present disclosure, there is provided a computer program, which when being executed on a processor, performs the method of the second aspect of the embodiments of the present disclosure.

The advantageous effects brought by the technical solutions according to the embodiments of the present disclosure may include:

After it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic view of an implementing environment involved in a method for transmitting data according to an exemplary embodiment.
Fig. 2 is a flow chart of a method for transmitting data according to an exemplary embodiment.
Fig. 3 is a flow chart of a method for transmitting data according to an exemplary embodiment.
Fig. 4 is a flow chart of a method for transmitting data according to an exemplary embodiment.
Fig. 5 is a block diagram of an apparatus for transmitting data according to an exemplary embodiment.
Fig. 6 is a block diagram of an apparatus for transmitting data according to an exemplary embodiment.
Fig. 7 is a block diagram of another apparatus for transmitting data according to an exemplary embodiment.
Fig. 8 is a block diagram of a device for transmitting data according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Firstly, before detailed illustration of the embodiments of the present disclosure, the implementing environment involved in the embodiments of the present disclosure will be briefly introduced.

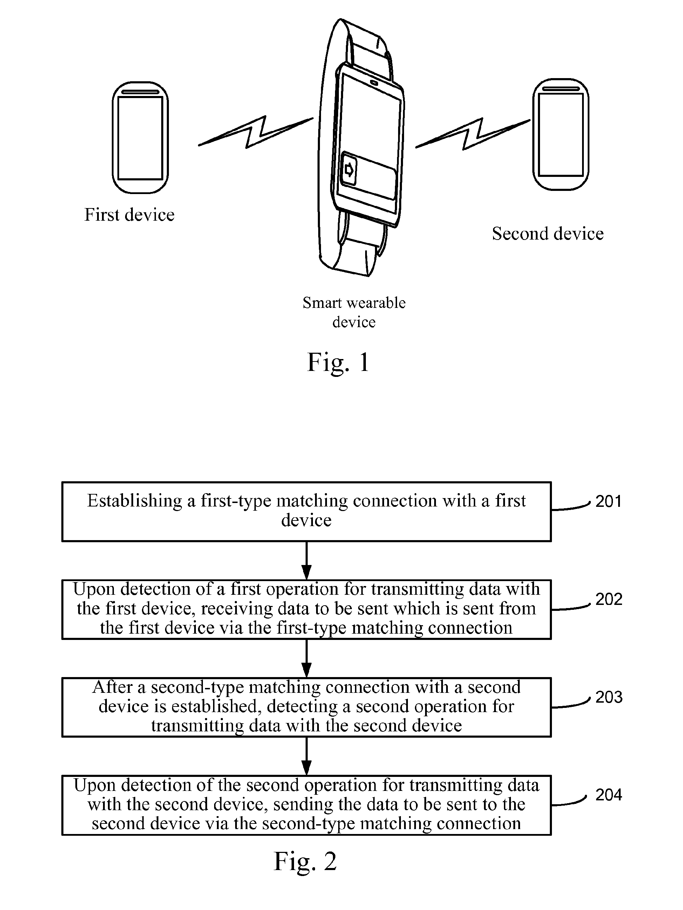

Fig. 1 is a schematic view of an implementing environment involved in the embodiments of the present disclosure. Referring to Fig. 1, a first device or a second device can be a smart phone, a tablet computer, a smart television or other smart terminal device. A smart wearable device can be a smart wrist band, smart glasses or the like. In Fig. 1, for merely illustration purposes, the first device and the second device are smart phones, and the smart wearable device is a smart wrist band, for example. When at least one of the first device and the second device is in an off-line state, it poses a challenge to direct data transmission between the first device and the second device. While in the embodiments of the present disclosure, the smart wearable device is provided as a data relay device, such that even when both of the first device and the second device are in the off-line state, the data transmission therebetween can be easily carried out, as long as the first device and the second device respectively establish a matching connection with the smart wearable device. The detailed process is described with reference to the following embodiments.

Fig. 2 is a flow chart of a method for transmitting data according to an exemplary embodiment. As shown in Fig. 2, the method for transmitting data is applied in the smart wearable device, and includes the following steps.

In step 201, a first-type matching connection with the first device is established.

In step 202, upon detection of a first operation for transmitting data with the first device, data to be sent which is sent from the first device is received via the first-type matching connection.

In step 203, after a second-type matching connection is established with a second device, it is detected a second operation for transmitting data with the second device.

In step 204, upon detection of the second operation for transmitting data with the second device, the data to be sent is sent to the second device via the second-type matching connection.

In the method provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

In another embodiment, upon detection of the first operation for transmitting data with the first device, the step of receiving data to be sent which is sent from the first device via the first-type matching connection includes:
it is determined that the first operation is detected when it is detected that a touch operation of a first designated form is generated between the smart wearable device and the first device; and
the data to be sent which is sent from the first device is received upon detection of the first operation via the first-type matching connection, and the data to be sent is determined by the first device according to a manual operation of a user on a first data sending page.

In another embodiment, prior to detection of the second operation for transmitting data with the second device, the method further includes:
the second-type matching connection is established with the second device;
detection of the second operation for transmitting data with the second device includes:
it is determined that the second operation is detected when it is detected that a touch operation of a second designated form is generated between the smart wearable device and the second device; and
sending the data to be sent to the second device via the second-type matching connection includes:
the data to be sent is determined according to a manual operation of a user on a second data sending page, and the data to be sent is sent to the second device via the second-type matching connection.

All the above optional technical solutions can be combined in any manner to form an optional embodiment of the present disclosure, which will not be repeated herein.

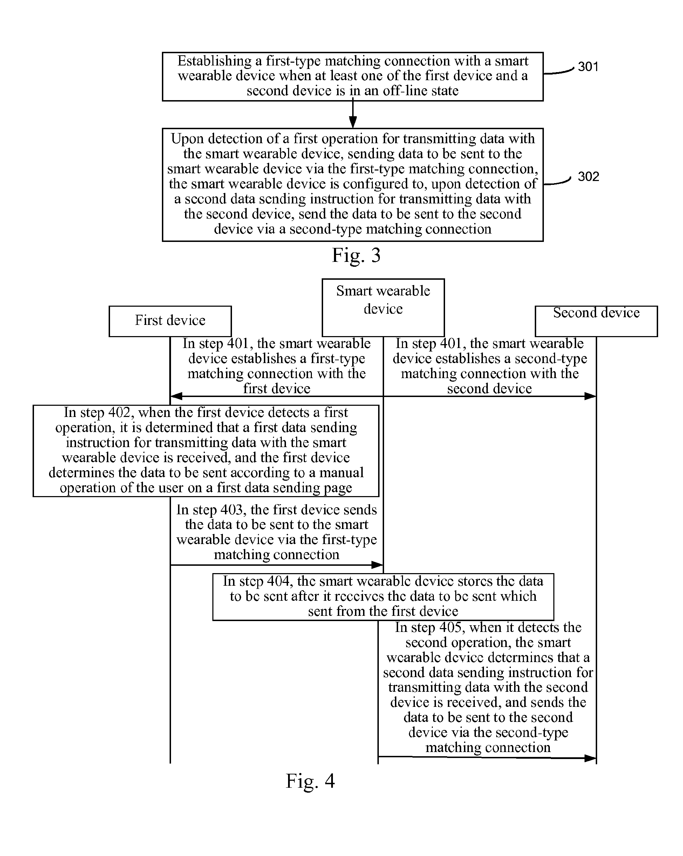

Fig. 3 is a flow chart of a method for transmitting data according to an exemplary embodiment. As shown in Fig. 3, the method for transmitting data is applied in the first device, and includes the following steps.

In step 301, a first-type matching connection is established with a smart wearable device when at least one of the first device and a second device is in an off-line state.

In step 302, upon detection of a first operation for transmitting data with the smart wearable device, data to be sent is sent to the smart wearable device via the first-type matching connection, and the smart wearable device is configured to, upon detection of a second operation for transmitting data with the second device, send the data to be sent to the second device via a second-type matching connection.

Wherein, the second-type matching connection is a connection established between the smart wearable device and the second device.

In the method provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

In another embodiment, prior to sending data to be sent to the smart wearable device via the first-type matching connection, the method further includes:

the data to be sent is determined according to a manual operation of a user on a first data sending page.

All the above optional technical solutions can be combined in any manner to form an optional embodiment of the present disclosure, which will not be repeated herein.

Fig. 4 is a flow chart of a method for transmitting data according to an exemplary embodiment. The devices involved are the first device, the smart wearable device and the second device. As shown in Fig. 4, for example, the first device is a data sending device and the second device is a data receiving device, and the method for transmitting data includes the following steps.

In step 401, the smart wearable device respectively establishes a first-type matching connection with the first device and a second-type matching connection with the second device.

Wherein, the matching connection can be a Blue Tooth connection, a near field communication (NFC) connection, an infrared connection or the like, and the form of the matching connection is not specifically limited in the embodiment of the present disclosure.

In the embodiment of the present disclosure, the smart wearable device can establish the second-type matching connection with the second device at a second time instant having a relatively short time interval to a first time instant when the smart wearable device establishes the first-type matching connection with the first device, or the second time instant can have a relatively large time interval to the first time instant. In case where the first device is in a relatively short physical distance to the second device (for instance, the first device and the second device are in the same room), the first time instant and the second time instant can have a relatively short time interval therebetween. For example, the second-type matching connection can be established immediately after the first-type matching connection is established.

In case where the first device is in a relatively large physical distance to the second device, the first time instant and the second time instant can have a relatively large time interval therebetween. For example, the user intends to transmit a picture between a smart phone and a smart television through the smart wearable device, after the smart wearable device establishes a first-type matching connection with the smart television, the user can immediately transmit the picture in the smart television to the smart wearable device and stores the picture therein, rather than immediately establish a second-type matching connection between the smart wearable device and the smart phone. Subsequently, when the user works or travels outside, and the smart phone is in a rather large distance to the smart television, after the second-type matching connection is established between the smart wearable device and the smart phone, the picture stored in the smart wearable device can be transmitted to the smart phone.

It should be noted that, the specific matching connection manner is dependent on the specific situation, which is not specifically limited by the embodiments of the present disclosure. The first-type match connection can have an establishing time with a long time interval or with a short time interval to the establishing time of the second-type match connection, which is not specifically limited by the embodiments of the present disclosure, either.

In addition, the smart wearable device can establish the first-type matching connection with the first device and the second-type matching connection with the second device through one of the following implementations.

In a first implementation, when at least one of the first device and the second device is in the off-line state, the smart wearable device establishes the first-type matching connection with the first device, and the second-type matching connection with the second device, wherein the first-type matching connection is different from the second-type matching connection.

For the first implementation, when at least one of the first device and the second device is in the off-line state, the smart wearable device can serve as a data relay device to realize data transmission between the first device and the second device.

In addition, different terminal devices may have different data transmission capabilities. For example, some terminal devices may have only Blue Tooth capability, while some terminal devices may have all of Blue Tooth, NFC, infrared and other capabilities. Accordingly, the smart wearable device can establish different types of matching connections according to the different capabilities of the first device and the second device. For example, the smart wearable device can establish a Blue Tooth connection with the first device and a NFC connection with the second device.

In a second implementation, when at least one of the first device and the second device is in the off-line state, the smart wearable device establishes the first-type matching connection with the first device, and the second-type matching connection with the second device, wherein the first-type matching connection is the same as the second-type matching connection.

For the second implementation, when at least one of the first device and the second device is in the off-line state, the smart wearable device can serve as a data relay device, to realize data transmission between the first device and the second device. In addition, when the first device and the second device have the same data transmission capability, the smart wearable device can establish the same type of matching connection with the first device and with the second device. For example, the smart wearable device can establish a Blue Tooth connection with each of the first device and the second device.

In step 402, when the first device detects a first operation, it is determined that a first data sending instruction for transmitting data with the smart wearable device is received, and the first device determines the data to be sent according to a manual operation of the user on a first data sending page.

In the embodiment of the present disclosure, the first operation can be of various forms. For example, when the first device detects that a touch event of a designated form is generated between the smart wearable device and the first device (for example, the smart wearable device touches the first device a preset number of times, or for a preset amount of time), or designated buttons on the first device and the smart wearable device are pressed, it is determined that the first operation for transmitting data with the smart wearable device is detected. The form of the first operation is not specifically limited in the embodiment of the present disclosure.

Further, when the first operation is generated between the smart wearable device and the first device, in addition to that the first device can detect the first operation for transmitting data with the smart wearable device, the smart wearable device can also determine that a first data receiving instruction for transmitting data with the first device is received when it detects the first operation. For example, in case where the first operation is a double touch event, after the first device touches with the smart wearable device twice, the first device and the smart wearable device both can detect that operation, and they determine that the first data sending instruction and the first data receiving instruction are received respectively.

Wherein, when the first device is transmitting data, a corresponding first data sending page is typically displayed on the terminal interface, and the user can select data to be sent according to the instruction on the first data sending page. Then the terminal can determine the data to be sent which is selected by the user according to the manual operation performed by the user. The data to be sent can be a picture, a text, a video, or the like, and the type of the data to be sent is not specifically limited in the embodiment of the present disclosure.

It should be noted that, the above step of detecting the first operation and the step of determining the data to be sent can be performed in any order. That is, the first device can determine the data to be sent according to the manual operation of the user after it detects the first operation. The first device can also firstly determine the data to be sent according to the manual operation of the user, and then directly send the determined data to be sent to the smart wearable device when the first operation is detected, which is not specifically limited by the embodiment of the present disclosure. In the embodiment of the present disclosure, merely for illustration, the first device determines the data to be sent according to the manual operation of the user after the first operation is detected, for example.

In step 403, the first device sends the data to be sent to the smart wearable device via the first-type matching connection.

In the embodiment of the present disclosure, since the smart wearable device has established the first-type matching connection with the first device, the first device can send the data to be sent to the smart wearable device via the first-type matching connection after it detects that the user clicks a data sending button on the data sending page.

Further, in addition to the data to be sent, the first device can also send a second device identification such as type information, a MAC address or the like of the second device to the smart wearable device, such that the smart wearable device can learn about to which device the data to be sent will be forwarded.

In step 404, the smart wearable device stores the data to be sent after it receives the data to be sent which is sent from the first device.

In the embodiment of the present disclosure, since in the above step 402, the smart wearable device has detected the first operation, and the smart wearable device determines that the first data receiving instruction for transmitting data with the first device is received, the smart wearable device has prepared for receiving the data. The smart wearable device stores the data to be sent in its storage medium such as a memory or a memory card after it receives the data to be sent which is sent from the first device, which is not specifically limited in the embodiment of the present disclosure.

In step 405, when it detects the second operation, the smart wearable device determines that a second data sending instruction for transmitting data with the second device is received, and sends the data to be sent to the second device via the second-type matching connection.

In the embodiment of the present disclosure, the second data operation can be of various forms. The second operation can be the same as, or be different from the first operation, which is not specifically limited in the embodiment of the present disclosure. For example, when the smart wearable device detects that a touch event of a designated form is generated between the second device and the smart wearable device (for example, the smart wearable device touches the second device a preset number of times or for a preset amount of time), or designated buttons on the smart wearable device and the second device are pressed, it is determined that the second data sending instruction for transmitting data with the second device is received. The form of the second operation is not specifically limited in the embodiment of the present disclosure.

Further, when the second operation is generated between the smart wearable device and the second device, in addition to that the smart wearable device can detect the second data sending instruction for transmitting data with the second device, the second device can also determine that a second data receiving instruction for transmitting data with the smart wearable device is received when it detects the second operation is generated. For example, in case where the second operation is a double touch event, after the smart wearable device touches with the second device twice, the smart wearable device and the second device both can detect that event, and they determine that the second data sending instruction and the second data receiving instruction are received respectively.

Wherein, when the smart wearable device is transmitting data, a corresponding second data sending page is typically displayed on its display interface, and the user can select data to be sent according to the instruction on the second data sending page. Then the smart wearable device can determine the data to be sent which is selected by the user according to the manual operation performed by the user.

In addition, since the smart wearable device has established the second-type matching connection with the second device, the smart wearable device can send the data to be sent to the second device via the second-type matching connection, so as to realize the data transmission between the first device and the second device.

In the method provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

Hereinafter, the above methods for transmitting data are illustrated with reference to a detailed example. It is assumed that a user A favors a picture on a smart television, the user A can transmit the picture to a smart wearable device. When the user A travels on business or for leisure to other places, if the user A intends to view the picture but it is not allowed by the network condition, the user A can transmit the picture stored in the smart wearable device to the smart phone, to view the picture, breaking away the restriction of the network condition. The process has the following specific steps.

In the first step, the smart wearable device establishes a first-type matching connection with the smart television.

In the second step, a designated number of touches are generated between the smart wearable device and the smart television.

In the third step, the smart television determines the picture to be transmitted by the user A according to a manual operation of the user A after it detects the touch event.

In the fourth step, the smart television transmits the picture to the smart wearable device via the first-type matching connection.

In the fifth step, the smart wearable device has prepared for receiving data after it detects the touch event, and receives the picture via the first-type matching connection and stores the picture.

In the sixth step, in case where the user A travels on business or for leisure to other places and he intends to view the picture, the smart wearable device establishes a second-type matching connection with the smart phone.

In the seventh step, a designated number of touches are generated between the smart wearable device and the smart phone.

In the eighth step, the smart wearable device determines the picture the user A intends to transmit according to a manual operation of the user A after it detects the touch event.

In the ninth step, the smart wearable device transmits the picture to the smart phone via the second-type matching connection.

In the tenth step, the smart phone has prepared for receiving data after it detects the touch event, and receives the picture via the second-type matching connection and stores the picture, thereby the user A can view the picture through the smart phone.

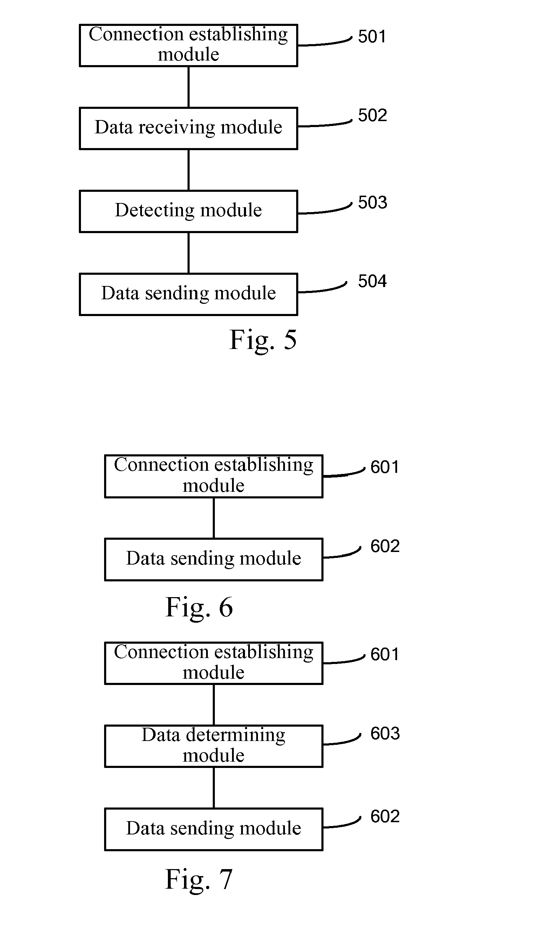

Fig. 5 is a block diagram of an apparatus for transmitting data according to an exemplary embodiment. Referring to Fig. 5, the apparatus is applied in a smart wearable device, and includes a connection establishing module 501, a data receiving module 502, a detecting module 503 and a data sending module 504.

Wherein, the connection establishing module 501 is configured to establish a first-type matching connection with a first device;
the data receiving module 502 is coupled to the connection establishing module 501 and is configured to, upon detection of a first operation for transmitting data with the first device, receive data to be sent which is sent from the first device via the first-type matching connection;
the detecting module 503 is coupled to the data receiving module 502 and is configured to, after a second-type matching connection with a second device is established, detect a second operation for transmitting data with the second device; and
the data sending module 504 is coupled to the detecting module 503 and is configured to, after the second operation for transmitting data with the second device is detected, send the data to be sent to the second device via the second-type matching connection.

In another embodiment, the data receiving module is configured to determine that the first operation is detected when it is detected that a touch operation of a first designated form is generated between the smart wearable device and the first device; and receive the data to be sent which is sent from the first device upon detection of the first operation via the first-type matching connection, the data to be sent being determined by the first device according to a manual operation of a user on a first data sending page.

In another embodiment, the connection establishing module is further configured to establish the second-type matching connection with the second device;
the detecting module is configured to determine that the second operation is detected when it is detected that a touch operation of a second designated form is generated between the smart wearable device and the second device; and
the data sending module is configured to determine the data to be sent according to a manual operation of a user on a second data sending page, and send the data to be sent to the second device via the second-type matching connection.

In the apparatus provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

Fig. 6 is a block diagram of an apparatus for transmitting data according to an exemplary embodiment. Referring to Fig. 6, the apparatus is applied in a first device. The apparatus includes: a connection establishing module 601 and a data sending module 602.

Wherein, the connection establishing module 601 is configured to establish a first-type matching connection with a smart wearable device when at least one of the first device and a second device is in an off-line state; and
the data sending module 602 is coupled to the connection establishing module 601 and is configured to, upon detection of a first operation for transmitting data with the smart wearable device, send data to be sent to the smart wearable device via the first-type matching connection, the smart wearable device is configured to, upon detection of a second operation for transmitting data with the second device, send the data to be sent to the second device via a second-type matching connection;
wherein, the second-type matching connection is a connection established between the smart wearable device and the second device.

In another embodiment, referring to Fig. 7, the apparatus further includes:
a data determining module 603 configured to determine the data to be sent according to a manual operation of a user on a first data sending page.

In the apparatus provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second data sending instruction for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

With respect to the apparatuses in the above embodiments, the specific manners for performing operations for individual modules therein have been described in detail in the embodiments regarding the methods, which will not be elaborated herein.

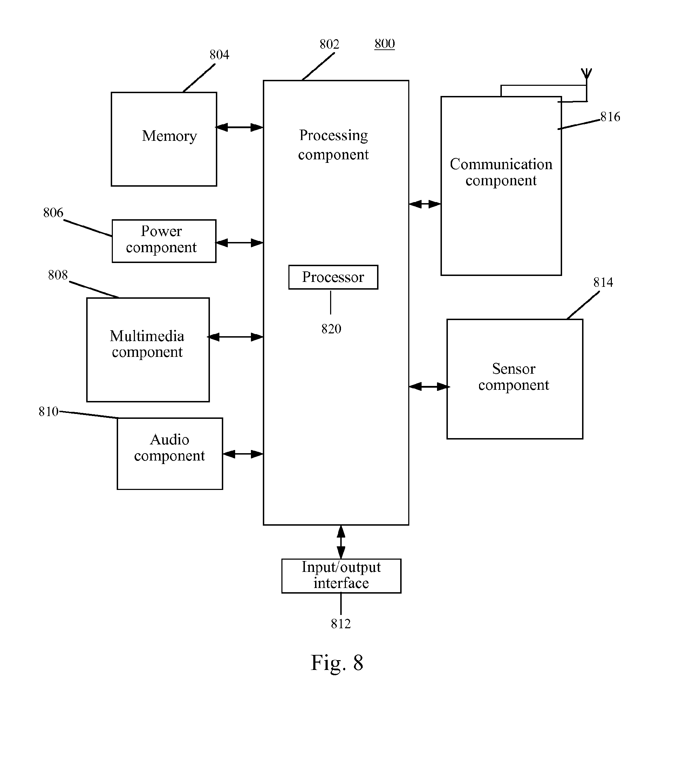

Fig. 8 is a block diagram of a device 800 for transmitting data according to an exemplary embodiment. For example, the device 800 refers to a smart wearable device.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a smart wearable device, the smart wearable device is caused to perform a method for transmitting data, including:
establishing a first-type matching connection with a first device;
upon detection of a first operation for transmitting data with the first device, receiving data to be sent which is sent from the first device via the first-type matching connection;
after a second-type matching connection with a second device is established, detecting a second operation for transmitting data with the second device; and
upon detection of the second operation for transmitting data with the second device, sending the data to be sent to the second device via the second-type matching connection.

In another embodiment, upon detection of a first operation for transmitting data with the first device, receiving data to be sent which is sent from the first device via the first-type matching connection includes:
determining that the first operation is detected when it is detected that a touch operation of a first designated form is generated between the smart wearable device and the first device; and
receiving the data to be sent which is sent from the first device upon detection of the first operation via the first-type matching connection, the data to be sent being determined by the first device according to a manual operation of a user on a first data sending page.

In another embodiment, prior to detection of the second operation for transmitting data with the second device, the method further includes:
establishing the second-type matching connection with the second device;
detection of the second operation for transmitting data with the second device includes:
determining that the second operation is detected when it is detected that a touch operation of a second designated form is generated between the smart wearable device and the second device; and
sending the data to be sent to the second device via the second-type matching connection includes:
determining the data to be sent according to a manual operation of a user on a second data sending page, and sending the data to be sent to the second device via the second-type matching connection.

In the non-transitory computer readable storage medium provided by the embodiment of the present disclosure, after it establishes the first-type matching connection with the first device and detects the first operation for transmitting data with the first device, the smart wearable device receives data to be sent which is sent from the first device via the first-type matching connection. After that, when it detects the second operation for transmitting data with the second device, the smart wearable device sends the data to be sent to the second device via the second-type matching connection. Since data transmission between different devices can be carried out based on the smart wearable device, such a method for transmitting data has wide applicability and notable universality, without being restricted to network connection conditions.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for transmitting data, which is applied in a smart wearable device, **characterized in that** the method comprises:
establishing (201) a first-type matching connection with a first device;
upon detection of a first operation for transmitting data with the first device, receiving (202) data to be sent which is sent from the first device via the first-type matching connection;
after a second-type matching connection with a second device is established, detecting (203) a second operation for transmitting data with the second device; and
upon detection of the second operation for transmitting data with the second device, sending (204) the data to be sent to the second device via the second-type matching connection.

2. The method according to claim 1, wherein upon detection of a first operation for transmitting data with the first device, receiving data to be sent which is sent from the first device via the first-type matching connection comprises:
determining that the first operation is detected when it is detected that a touch operation of a first designated form is generated between the smart wearable device and the first device; and
receiving the data to be sent which is sent from the first device upon detection of the first operation via the first-type matching connection, the data to be sent being determined by the first device according to a manual operation of a user on a first data sending page.

3. The method according to claim 1 or 2, wherein prior to detection of the second operation for transmitting data with the second device, the method further comprises:
establishing the second-type matching connection with the second device;
detection of the second operation for transmitting data with the second device comprises:
determining that the second operation is detected when it is detected that a touch operation of a second designated form is generated between the smart wearable device and the second device; and
sending the data to be sent to the second device via the second-type matching connection comprises:
determining the data to be sent according to a manual operation of a user on a second data sending page, and sending the data to be sent to the second device via the second-type matching connection.

4. A method for transmitting data, which is applied in a first device, **characterized in that** the method comprises:
establishing (301) a first-type matching connection with a smart wearable device when at least one of the first device and a second device is in an off-line state; and
upon detection of a first operation for transmitting data with the smart wearable device, sending (302) data to be sent to the smart wearable device via the first-type matching connection, the smart wearable device being configured to, upon detection of a second operation for transmitting data with the second device, send the data to be sent to the second device via a second-type matching connection;
wherein, the second-type matching connection is a connection established between the smart wearable device and the second device.

5. The method according to claim 4, wherein prior to sending data to be sent to the smart wearable device via the first-type matching connection, the method further comprises:
determining the data to be sent according to a manual operation of a user on a first data sending page.

6. An apparatus for transmitting data, which is applied in a smart wearable device, **characterized in that** the apparatus comprises:
a connection establishing module (501) configured to establish a first-type matching connection with a first device;
a data receiving module (502) configured to, upon detection of a first operation for transmitting data with the first device, receive data to be sent which is sent from the first device via the first-type matching connection;
a detecting module (503) configured to, after a second-type matching connection with a second device is established, detect a second operation for transmitting data with the second device; and
a data sending module (504) configured to, after the second operation for transmitting data with the second device is detected, send the data to be sent to the second device via the second-type matching connection.

7. The apparatus according to claim 6, wherein the data receiving module is configured to:
determine that the first operation is detected when it is detected that a touch operation of a first designated form is generated between the smart wearable device and the first device; and
receive the data to be sent which is sent from the first device upon detection of the first operation via the first-type matching connection, the data to be sent being determined by the first device according to a manual operation of a user on a first data sending page.

8. The apparatus according to claim 6 or 7, wherein
the connection establishing module is further configured to establish the second-type matching connection with the second device;
the detecting module is configured to determine that the second operation is detected when it is detected that a touch operation of a second designated form is generated between the smart wearable device and the second device; and
the data sending module is configured to determine the data to be sent according to a manual operation of a user on a second data sending page, and send the data to be sent to the second device via the second-type matching connection.

9. An apparatus for transmitting data, which is applied in a first device, **characterized in that** the apparatus comprises:
a connection establishing module (601) configured to establish a first-type matching connection with a smart wearable device when at least one of the first device and a second device is in an off-line state; and
a data sending module (602) configured to, upon detection of a first operation for transmitting data with the smart wearable device, send data to be sent to the smart wearable device via the first-type matching connection, the smart wearable device being configured to, upon detection of a second operation for transmitting data with the second device, send the data to be sent to the second device via a second-type matching connection;
wherein, the second-type matching connection is a connection established between the smart wearable device and the second device.

10. The apparatus according to claim 9, wherein the apparatus further comprises:
a data determining module (603) configured to determine the data to be sent according to a manual operation of a user on a first data sending page.

11. A device for transmitting data, **characterized in that** the device comprises:
a processor (820); and
a memory (804) for storing instructions executable by the processor;
wherein the processor is configured to perform the method of any of claims 1 to 3.

12. A device for transmitting data, **characterized in that**, the device comprises:
a processor (820); and
a memory (804) for storing instructions executable by the processor;
wherein the processor is configured to perform the method of any of claims 4 or 5.

13. A computer program, which when being executed on a processor causes it to perform the method according to any one of claims 1 to 3.

14. A computer program, which when being executed on a processor causes it to perform the method according to any one of claims 4 to 5.
